# EUROPEAN PATENT APPLICATION

(11) **EP 1 642 628 A1**
(43) Date of publication of application: **05.04.2006**
(21) Application number: 04748909.1
(22) Date of filing: 24.05.2004
(51) Int. Cl.: A63G 31/00, G09B 23/18

(54) **TEACHING AMUSEMENT ATTRACTION**

(30) Priority: 27.05.2003 RU 2003115509
(71) Applicant: Bugrov, Stanislav Lvovich, Nizhny Novgorod, 603146 (RU)
(72) Inventor: Bugrov, Stanislav Lvovich, Nizhny Novgorod, 603146 (RU)
(74) Representative: Winckels, Johannes Hubertus F.
(86) International application number: PCT/RU2004/000194
(87) International publication number: WO 2004/105906

(57) **Abstract**

The invention relates to amusement attraction engineering and can be used in teaching physics, chemistry, and biology to demonstrate the conversion of chemical energy into electrical energy. The inventive attraction comprises playing members (1) and (2) of a certain shape whose function is fulfilled by different metals spaced not less than at 0.5 V in an electrochemical series. The playing members (1) and (2) are coupled to visual display means, for instance a microammeter (3). The playing members (1) and (2) are not coupled directly to each other in a circuit. One person (4) is or a group of persons (4, 5, 6) are coupled to the circuit at the opposite side of the playing members (1) and (2) in order to close the circuit loop, said persons being able to interact with the playing members (1) and (2) and between each other by exposed portions of their bodies, for instance by hands. When interaction with a moist medium of skin takes place, there are potential-determining reactions in different metals that stimulate the occurrence of the electromotive force and the generation of circuit in the circuit, which visually, divertingly and amusingly represents the conversion of chemical energy into electrical energy. The microammeter (3) fixes the presence and value of said current.

## Description

### Field of the Invention

The invention relates to amusement attraction engineering and can be used in teaching physics, to demonstrate the conversion of chemical energy into electrical energy.

### Background of the Invention

Known is a teaching game designed for amusing and making it possible to visualize results of effects caused by two-coordinate probability distribution (see RF Patent Nº 2,108,835, IPC A63F 9/02, G09B 23/00, published on April 20, 1998).

Known is "Teaching Amusement Attraction" with a planetarium (see RF Patent Nº 2,183,490, IPC A63G 31/00, published on June 6, 2002), designed for amusements, placed in a special building of "extraterrestrial architecture" and comprising a rotary greenhouse, a central bar located under the starry sky highlighted on a semi-spherical opaque ceiling, and equipped with tables having means for party-line communication with the attraction organizers for taking part in a contest, a restaurant, and a dancing zone.

There is a number of known teaching apparatuses for demonstration of different physics laws, for example, "Apparatus for Demonstration of Magnetic Field" (see the Certificate for Utility Model Nº 22,258, IPC G09B 23/18, published on March 3, 2002), "Educational Apparatus for Demonstrating Conversion of Oscillatory to Rotary Motion" (see RF Patent Nº 2,217,452, IPC G09B 23/06, published on March 10, 1999; RF Patent Nº 2,029,991, IPC G09B 23/06, published on February 2, 1995), but information about educational apparatuses that demonstrate the conversion of chemical energy into electrical energy divertingly and amusingly is absolutely absent in published references.

The similar prior art solution (prototype) closest it its technical essence and partial designation to the present invention is "Educational Apparatus for Demonstrating Conversion of One Type of Energy into Another," comprising a base, a bracket with an energy conversion member, and two conductors of different metals, one ends of said conductors being coupled to a display, wherein said apparatus has the energy conversion member made as a disk with a felt coating and mounted on the bracket, and free ends of the conductors of different metals are welded and placed at a felt surface of the disk (see the USSR Inventor's Certificate Nº 1,014,004, IPC G09B 23/06, published on April 23, 1983).

Heat of a junction formed by free ends of the conductors of different metals takes place due to mechanical interaction of the junction with a felt ring. The result of this interaction is the conversion of mechanical energy into heat energy and the conversion of heat energy into electrical energy.

The disadvantage of the prior art apparatus is that it is possible to demonstrate the conversion of mechanical energy into heat energy and the conversion of heat energy into electrical energy divertingly and amusingly, but it is technically impossible to demonstrate the conversion of chemical energy into electrical energy divertingly and amusingly, and it is also impossible to demonstrate the action of the Ohm's law.

### Essence of the Invention

The technical problem to be solved by the present invention is to provide the visual, diverting and amusing demonstration of the Ohm's, Ampere's, and Faraday's laws, and the ability to visualize currents of galvanic skin nature.

The technical result - widening the functionality and improving the demonstration capabilities of the apparatus - is accomplished by that in a teaching amusement attraction comprising two different metals coupled to visual display means said metals are formed as playing members that provide the generation of electric current in an attraction circuit when a person or a group of persons able to interact with the playing members, for instance by hands, closes or close said circuit loop, said playing members being made of metals spaced from each other not less than at 0.5 V in an electrochemical series and not connected directly to each other in the circuit.

The different metals in the disclosed teaching amusement attraction are formed as playing members, each member and having its one end connected to the visual display means. The playing members are not directly connected to each other in the circuit but are connected by a person who is a second-class conductor and is able to interact with said members by exposed parts of his or her body, for instance by hands, when a circuit loop providing the operation of the attraction is closed. The electric current occurs in the circuit, and the display means visualizes the presence and value of said current.

The playing members are made of metals spaced from each other not less than at 0.5 V in an electrochemical series.

In case of coupling a group of persons into the attraction circuit, said persons being able to interact with playing members of a certain shape by exposed portions of their bodies, for instance by hands, the closure of the attraction circuit loop occurs as follows: the first participant of the attraction takes one playing member, for instance into a palm, and touches with his or her second hand or any other exposed portion (a shoulder, a foot, a nose, lips) of his or her body, for instance, a hand or any other exposed portion (a shoulder, a foot, a nose, lips) of the body of the second participant which in turn touches, for instance with a hand or any other exposed portion (a shoulder, a foot, a nose or lips) of his or her body, for instance, a hand or the above-mentioned exposed portions of the body of the third person which grips the second playing member, for instance, in one of free palms. The electric current occurs in the circuit, said current being generated by the playing members whose function is fulfilled by different metals - zinc and silver. When they interact with a moist medium of skin, there are potential-determining reactions in said metals that stimulate the creation of an electromotive force and the generation of current, the presence and value of said current being fixed by the display means, for instance by a microammeter.

A galvanic skin current occurs in the attraction circuit that visually, divertingly and amusingly represents the conversion of chemical energy into electrical energy. In doing so, the group of persons for the first time takes part in the energy conversion and performs the function of the second-class conductors that close the attraction circuit loop, and the function of medium that provides the progress of the potential-determining reactions.

The playing members are made of metals spaced from each other not less than at 0.5 V in an electrochemical series. For instance, the playing members can be made of zinc and copper, or of zinc and silver, or of other metals that meet the above-mentioned condition.

The teaching amusement attraction distinguishes from the prototype in that, first, to widen the functionality in use of the apparatus and to improve its demonstrational capabilities the different metals in the attraction are formed as playing members with which a person or a group of persons can interact, that is, take them, for instance by hand(s) or touch them with any exposed portion(s) of their bodies.

Second, from comparison with the prototype, one can see that the nature of coupling between parts (members) of the circuit is also different, and mutual arrangement of parts (members) in the electrical circuits is different as well, exactly: the playing members in the disclosed attraction are not directly connected to each other in the circuit, while ends of conductors of different metals in the prototype apparatus are soldered.

Third, to close the circuit loop a new structural member - a second-class conductor being a person or a group of persons - is introduced to the teaching amusement attraction; this makes it possible to create a galvanic skin current generated by the playing members of zinc and silver. Thus, practice of the disclosed attraction makes it possible to demonstrate the conversion of chemical energy into electrical energy visually, divertingly and amusingly.

To close the loop, the prototype apparatus includes an energy conversion member being a disk with a felt coating, mounted on a bracket and capable of rotating by a drive, and soldered free ends of conductors of different metals are placed on the disk. As a result of intimate contacting a felt ring surface of the rotating disk by a junction, the latter is heated and the thermoelectric effect occurs. Thus, one can see the demonstration of conversion of mechanical energy into heat energy and of heat energy into electrical energy. It is impossible to solve the problem posed by the inventor both based on the prior art information and by use of the prototype apparatus comprising a thermocouple of different metals for energy conversion.

If the playing members of different metals, for instance zinc and silver, are connected to each other in both the disclosed invention and the prototype apparatus, then, when a person touches them or each of them, there will not be current in the microammeter circuit because this contact disconnects the ammeter itself from the measuring circuit of the galvanic couple that has not a property of thermocouple. Using the thermocouple of the prototype apparatus, it is possible to measure only one parameter of a person - his or her temperature, in other words, a person fulfills only the function of a heating member and any way takes no part in the generation of current in the circuit. It is impossible to demonstrate the conversion of chemical energy into electrical energy by means of the prototype apparatus comprising the thermocouple. It is also impossible to demonstrate an action of the Ohm's law on a living system (a person or a group of persons) visually, divertingly and amusingly, in other words, the demonstration capabilities of the disclosed attraction are improved in its practice as compared to the prototype apparatus.

Fourth, the playing members in the disclosed attraction are made of metals spaced from each other not less than at 0.5 V in an electrochemical series. The description of the prototype does not include any special requirements to a material of conductors of different metals.

Said distinctions of the disclosed teaching amusement attraction from the prototype make it possible to widen the functionality of the disclosed attraction, that is, to see the presence of current of galvanic skin nature in a scale of display means, resulted from conversion of chemical energy to electrical energy; it also becomes possible for a person or a group of persons coupled into the attraction circuit to measure not only a temperature but also a current strength (value) depending upon his or her or their resistance and also depending upon a grip force of hands thereby to demonstrate an action of the Ohm's law visually, divertingly and amusingly, and perhaps, to demonstrate actions of the Ampere's and Faraday's laws as well. It is possible to measure and demonstrate an age of a person, his or her conductivity, physical training.

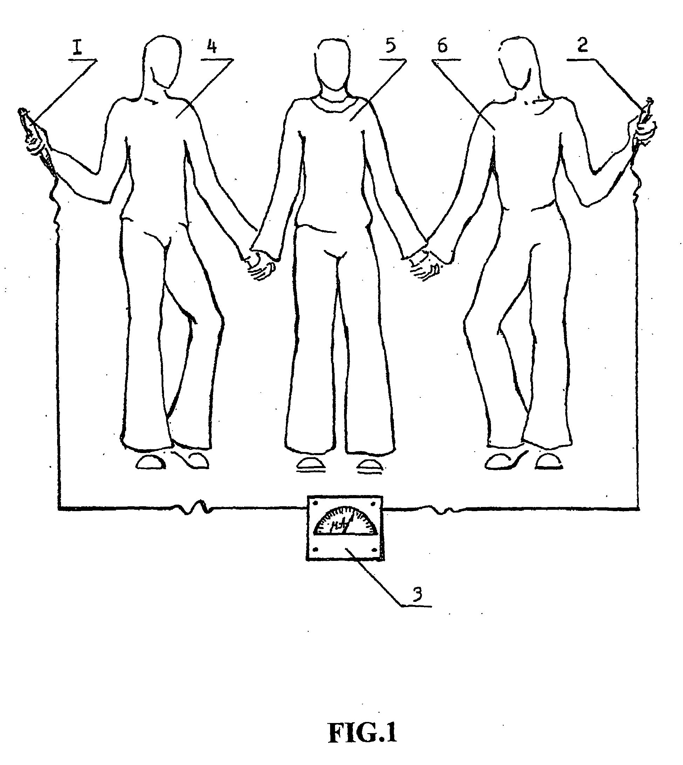

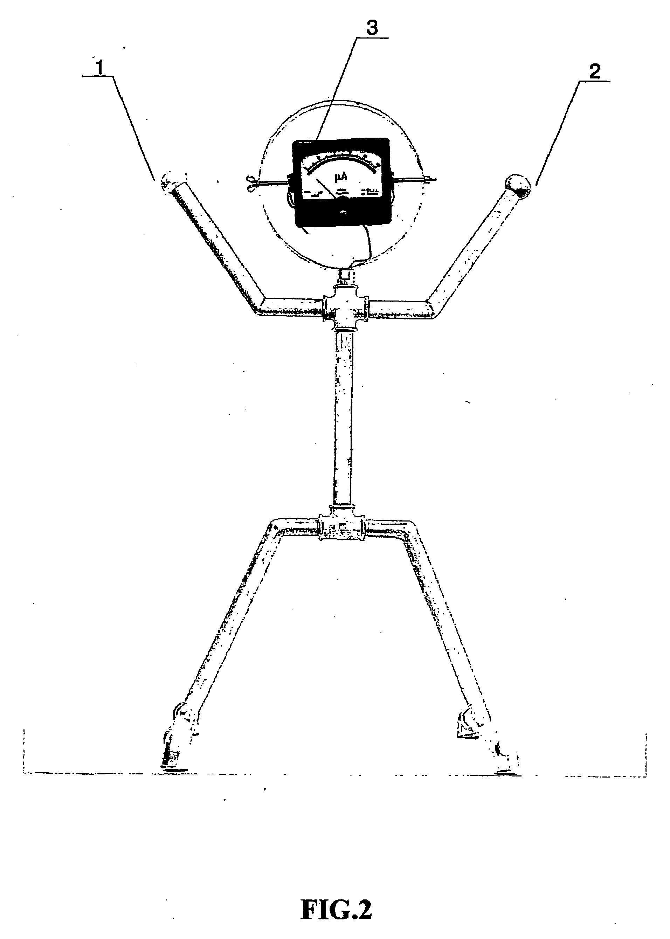

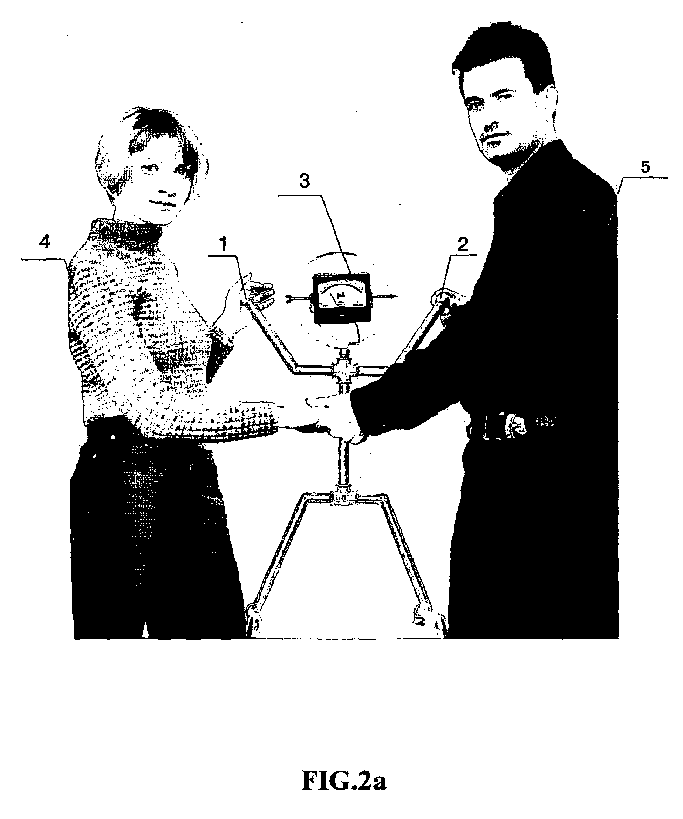

The invention is explained by drawings, wherein: Figure 1 illustrates a general diagram of the disclosed teaching amusement attraction; Figures 2, 2a, Figure 3, and Figures 4, 4a are real teaching amusement attractions.

An attraction (see Figure 1) comprises playing members 1 and 2 of a certain shape, whose function is fulfilled by different metals - silver (1) and zinc (2). The playing members 1 and 2 are coupled to display means 3, for instance a microammeter. Three persons 4, 5, 6 are coupled to the circuit at the opposite side in order to close the circuit loop, said persons being able to interact with the playing members 1 and 2 and between each other by exposed portions of their bodies, for instance by hands. A galvanic skin current occurs in the attraction circuit, which fact visually, divertingly and amusingly represents the conversion of chemical energy into electrical energy. The microammeter 3 fixes the presence and value of said current. The value of current depends upon a handshake force. Increase in the handshake force decreases the circuit resistance and increases the current strength in accordance with the Ohm's law.

Predetermined game scenarios are used to execute a game (see Figures 2, 2a, Figure 3, and Figures 4, 4a).

Several, for instance two persons take part in the attraction represented in Figure 2. One participant (a girl) 4 of the attraction (see Figure 2a) holds with her left hand on one hand of a doll plaster cast - a playing member 1 made of silver and having the shape of a small ball. Another participant (a youth) 5 holds with fingers of his left hand on another hand of the dolly plaster cast - a playing member 2 made of zinc and having the shape of a small ball as well. The participants shake their free hands thereby to close a loop including the microammeter 3. A galvanic skin current occurs in the attraction circuit, and the microammeter fixes the presence and value of said current.

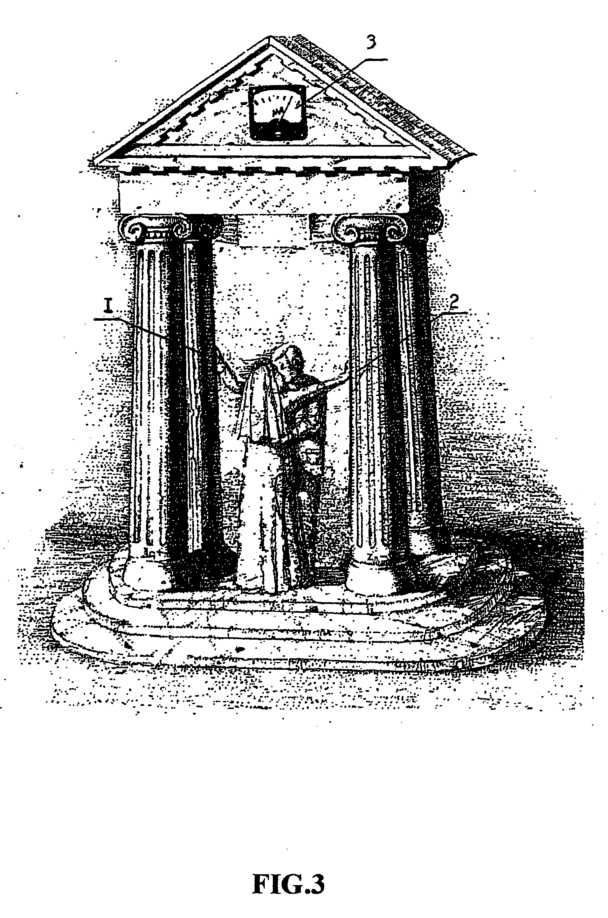

Newly married couple (a girl 4 and a youth 5) takes part in the attraction (see Figure 3). They come to playing members 1 and 2 made, for instance, as columns of silver (1) and zinc (2), each participant touching his or her own column with his or her hand and kissing each other thereby to close a loop of the circuit that includes visual display means, for instance a microammeter 3. The result of the wedding kiss - occurrence of a galvanic skin current - is fixed at a scale of the microammeter.

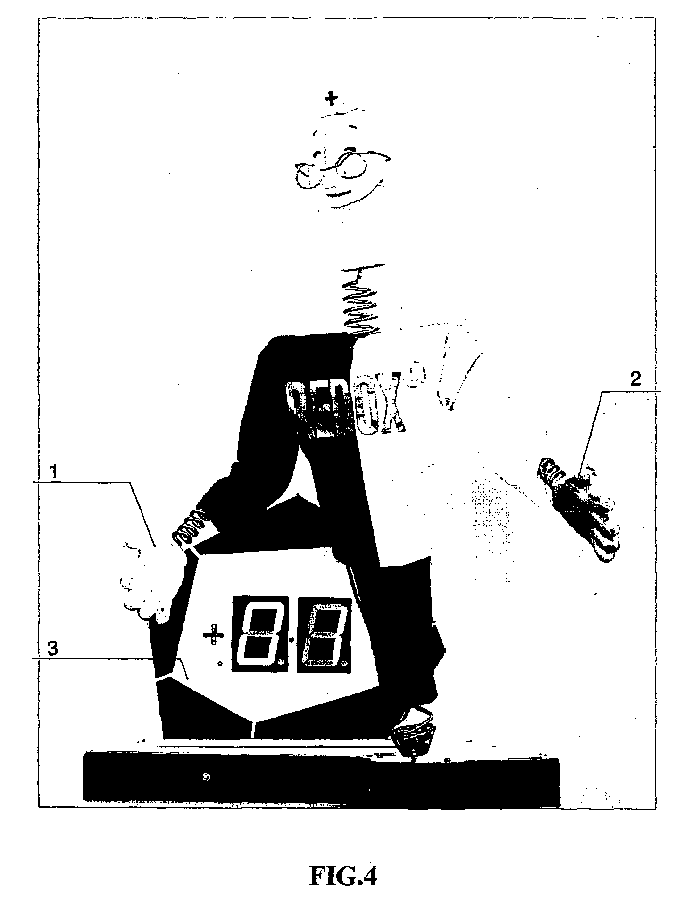

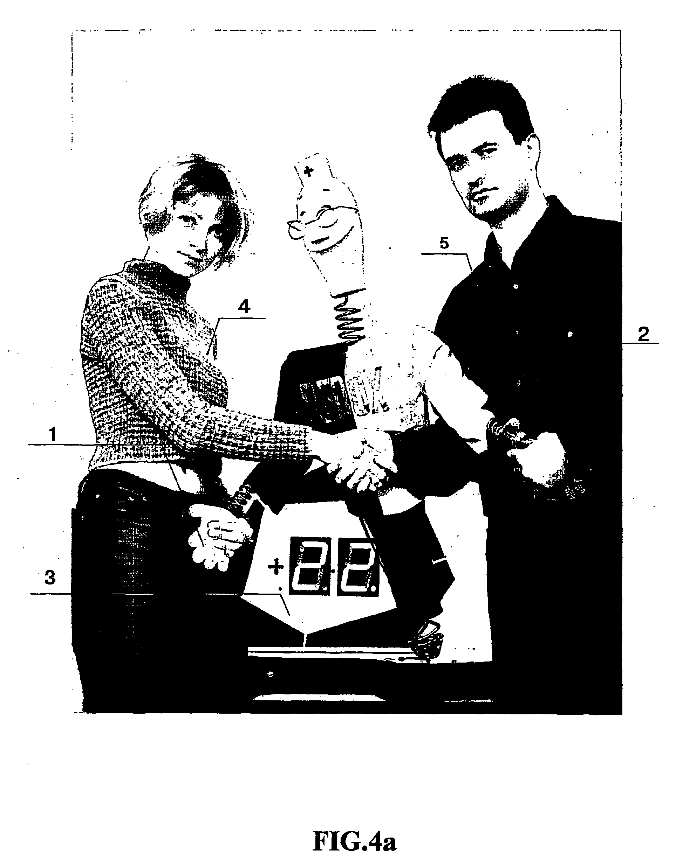

Several, for instance two, persons take part in the attraction represented in Figure 4. One participant (a girl) 4 of the attraction (see Figure 4a) takes a playing member 1 made of silver as a doll plaster cast into her hand. Another participant (a youth) 5 holds with his one hand on another playing member 2 made of zinc and as a palm of the dolly plaster cast as well. The playing members 1 and 2 are coupled to visual display means 3 made as a light electronic panel. When the attraction participants shake their hands, a current occurs as a result of closure of the circuit loop, and the light electronic panel fixes the presence and value of said current visually, divertingly and amusingly.

Metals for the playing members are selected to space from each other not less than at 0.5 V in an electrochemical series, which provides a current value necessary to visualize said current directly at the scale of the microammeter and sufficient to make the attraction diverting and amusing, where a player sees or a group of players see a result of his or her or their participation in the attraction, being wondered and glad at it.

An electromotive force value of less than 0.5 V complicates the visualization of current in the circuit formed by people because of its higher resistance.

### Industrial applicability

The teaching amusement attraction can be used as an apparatus in learning processes of schools, colleges, institutes, and also as an amusement game placed in parks, in squares, in streets, and in closed sites, wherein one, two or more persons can take part in such a game. The attraction is provided with new consumer properties: if a person takes part in the operation of the prototype apparatus only by turning a drive on and giving a necessary rotational speed to a circle, the disclosed invention makes it possible for each who wishes to approach and take part in the operation of the attraction to see a current at the scale of the display means, said current being generated by playing members when said person closes the circuit.

In its practice, the teaching amusement attraction couples the action of physical lows with situations of handshake and kiss met by an ordinary person every day it his or her day-today activity.

The attractions (see Figures 1, 2, 3, 4) are self-supported, can be transported and have appropriate overall dimensions for this purpose, and can be used in a learning process in order to demonstrate the conversion of chemical energy into electrical energy visually, divertingly and amusingly.

Apart from advantages listed above, the development of the disclosed attractions will improve the amusement effectiveness of attractions.

## Claims

1. A teaching amusement attraction comprising two different metals coupled to visual display means, **characterized in that** said metals are formed as playing members that provide generation of electric current in an attraction circuit when a person or a group of persons able to interact with the playing members, for instance by hands, closes or close said circuit loop, said playing members being made of metals spaced not less than at 0.5 V in an electrochemical series and not connected directly to each other in the circuit.
